(19) Europäisches Patentamt

European Patent Office

Office européen des brevets

(11) Publication number: **0 450 820 A1**

# EUROPEAN PATENT APPLICATION

(21) Application number: **91302520.1**

(22) Date of filing: **22.03.91**

(51) Int. Cl.⁵: **F16B 13/12, F16B 19/10**

(30) Priority: **05.04.90 GB 9007749**
**16.07.90 GB 9015580**

(43) Date of publication of application:
**09.10.91 Bulletin 91/41**

(84) Designated Contracting States:
**AT BE CH DE DK ES FR GB GR IT LI LU NL SE**

(71) Applicant: **P.S.M. INTERNATIONAL PLC**
**Longacres Willenhall**
**West Midlands WV13 2JS (GB)**

(72) Inventor: **Parker, Leslie James**
**"Glengarriff", Reservoir Road**
**Beaufort, Ebbw Vale, Gwent, Wales (GB)**

(74) Representative: **Hands, Horace Geoffrey et al**
**GEORGE FUERY & CO Whitehall Chambers 23**
**Colmore Row**
**Birmingham B3 2BL (GB)**

(54) Fastener.

㋲ A two part fastener having a tubular shank split into two legs (12,14), and a pin which can be pushed or screwed home to separate the legs (12,14), has grooves on the pin cooperating with a single tooth (24) formed directly on one of the legs and projecting into the pin receiving bore, to control the axial position of the pin.

EP 0 450 820 A1

Fig. 9

One well known kind of fastener for fixing two parts together comprises a tubular shank integral with a head. The shank is to extend through the two parts and is then expanded radially on the opposite side of the fastener from the head, thus gripping the assembly between the head and the expanded portion. Many different designs have been proposed using this general principle.

In one example, in US P 4 610 587, the fastener is injection moulded of plastics materials in two parts, one of which is provided with the shank and head and the other of which is a circumferentially grooved pin for example a screw. The shank is axially split into parallel legs although the legs are joined at the end opposite to the head to facilitate release and re-use. Expansion is effected by the screw inserted through the head and the end of the screw engages ramp portions formed on the inner and adjacent surfaces of the legs, forcing them apart as the screw goes home.

In order to provide for rapid installation of this kind of fastener, for example in automotive trim panel assembly on a production line, whilst enabling subsequent removal and replacement as when the vehicle undergoes maintenance or repair, it is known to arrange for the screw to have a sliding ratchet action, without rotation, in installation, but to be required to be rotated and unscrewed for release. For example the said U.S. Patent provides a plurality of screw-engaging teeth or threads formed on a series of lugs each made integral with the shank part but lying in corresponding shank slots with the major periphery of the lug being free from the said legs, and the lugs can then pivot at the head end of the shank and when the screw is thrust in they pivot outwardly to swing these teeth out of the path of the screw and allow the sliding ratchet action. In other words the tubular shank has comprised four parts each separated by axial slots, namely two legs and two lugs.

It has been found in practice that the design which permits ratchet action is rather sensitive, and if subject to forces in an appropriate direction, for example upon impact, the lugs can equally well swing out and release the screw when not required.

These fasteners are needed in relatively small sizes, typically of the order of 5mm overall shank diameter, and the separation of the lugs about the substantial part of their periphery from the legs involves thin and delicate parts in the moulding dies, which because of the inevitable erosion in use means a high die cost and hence part cost.

The object of the invention is to solve these problems.

According to one aspect of the invention, a fastener of the kind comprising a first part having a head and a tubular shank projecting from the head which is axially slit into legs, internal ramps on the legs, and a second part comprising a circumferentially grooved pin for insertion into the shank for expanding the shank by contact with the ramps, and means in the first part for co-operating with the pin to control the axial position of the same, is characterised in that said means cooperating with the pin comprise a tooth provided directly on one of the legs and projecting into the pin receiving bore between the legs.

Preferably the tooth has one flank facing the pin entry end of the shank which is inclined so as to facilitate deflection of the tooth accompanied by flexing of the said leg, as the pin slides in with ratchet action on the tooth, and the other and opposite face is in a plane normal to the shank axis to prevent reverse direction ratcheting.

Hence the tool problem is solved because especially thin die sections, in tools used to injection mould the fasteners, can be eliminated and because the ratchet is provided by the shape of the tooth rather than by the tooth being movable, the risk of reverse action ratcheting is avoided.

According to another aspect of the invention, tools for injection moulding the first part of the fastener of the invention comprise a multi component die set, namely one component having a recess to form the head of the fastener and also providing or associated with a mandrel to form a substantial portion of the pin receiving bore of the shank of the fastener, and said mandrel being profiled to form the said one flank of the tooth, and second and third components each of which is recessed to produce a one of the legs of the shank and has web means to form slits to separate the legs, one of the second and third components including a core plug extending generally normally of a plane at which the second and third components meet when the die components are closed together, said core plug being located to extend through one leg and into said bore so as to form said other and opposite face of the tooth, the said slits between the legs being located in said plane, and the first component meeting the other two in a plane normal to the axis of the fastener.

According to a third aspect of the invention, a method of making the fastener of the invention comprises injection moulding material into the said tools.

Two embodiments of the invention are now more particularly described with reference to the accompanying drawings wherein:

Figure 1 is an elevation of a fastener in the fully assembled and fastening position;

Figure 2 is an end elevation of the same;

Figure 3 is an elevation of the pin forming part of the fastener;

Figure 4 is a plan view of the second part of the fastener;

Figure 5 is a sectional elevation on the line 5-5 of Fig.4;

Figures 6 and 7 are diagrammatic sectional views of manufacturing tools taken at right angles to one another and partly in section;

Figure 8 is a view similar to Figure 3 showing an alternative pin for use in the same second part, to form the second embodiment; and

Figure 9 is a view in section showing the second embodiment installed and in use.

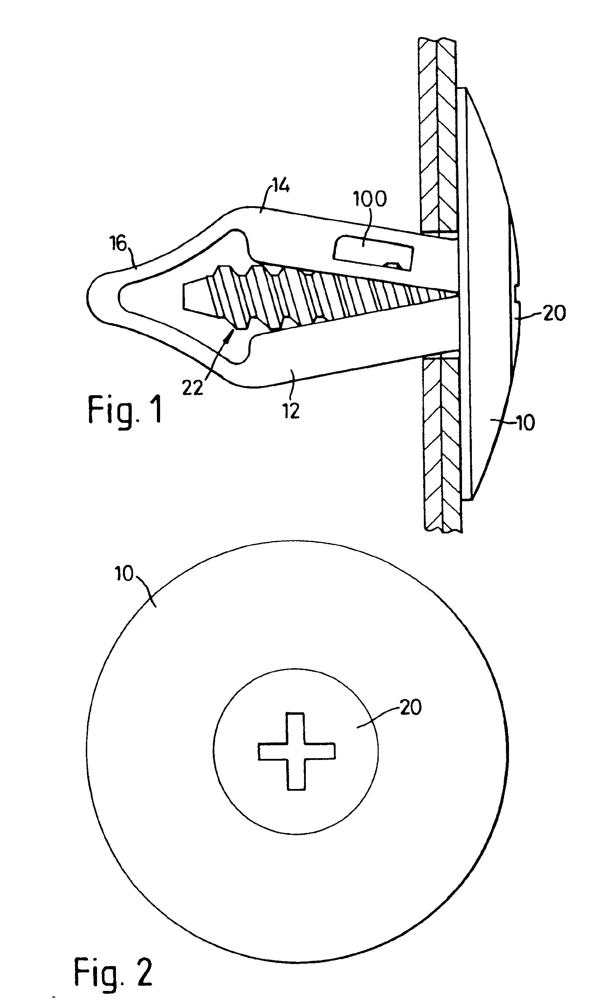

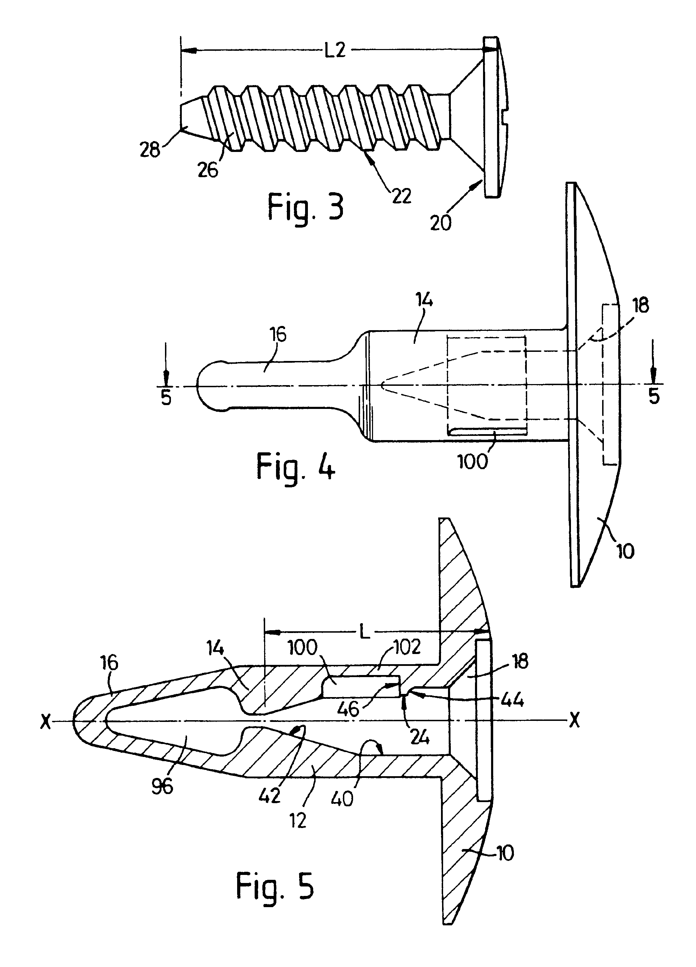

Turning now to Figure 1 of the drawings, the fastener comprises a head 10 made integral with the shank which is axially slit into two legs 12, 14 and these are joined together by a bow portion 16 at the end opposite to the head. The head is for example countersunk at 18 Figure 5 to accommodate head 20 of the screw 22. One of the legs 14 is provided with an internally projecting tooth 24. The screw is provided with a male helix of thread formation 26. The screw has a tapering or pointed end 28 which may be at an included angle of say 30°.

The legs 12, 14 are each of substantially "C" section. That is to say internally and externally (with the exception explained below) their surfaces are concentric about the longitudinal axis X-X Fig.5 at least over the length L. This length L is substantially shorter than the length L2 (Fig.3) of the screw.

Internally (Fig.5) the tubular shank comprises a cylindrical portion 40 which is a clearance fit on the screw, and a tapering portion 42 providing ramps to engage with the screw. The included angle of the ramps 42 is preferably slightly different from that of the leading tapered end 28 of the screw, for example is of the order of 32° included angle so as to ensure initially point or line contact rather than face contact when the end 28 first encounters the ramps 42.

The tooth 24 is centrally located on the width of the leg 14, as will be appreciated from comparison of Figures 4 and 5. The tooth 24 may cooperate as a screw thread tooth with the male thread 26 formed on the screw but is of different contour. It comprises an inclined flank 44 facing the head, and a second flank 46 facing the ramps 42 which face (46) lies in a plane normal to the axis X-X.

During installation, the screw is pushed in through the countersunk aperture in the head, and the face 44 facilitates flexing of the leg 14 so that the tooth 24 has a ratchet action with the successive turns of the screw as the latter slides in a purely axial direction. The end 28 engages the ramps and forces the legs apart to the Figure 1 position and the end of the screw is accommodated in the expanded bow 16. For release of the fastener, it is necessary to rotate the screw in the appropriate direction so that it unscrews past the tooth 24, and the resilience returns the shank to the Fig. 5 position.

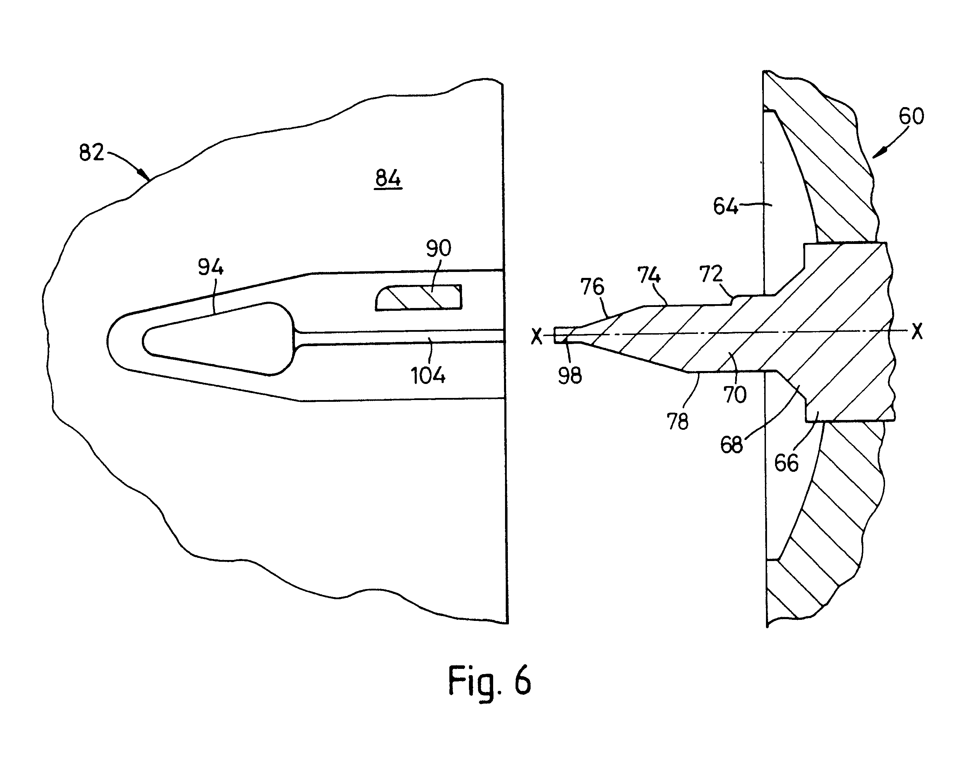

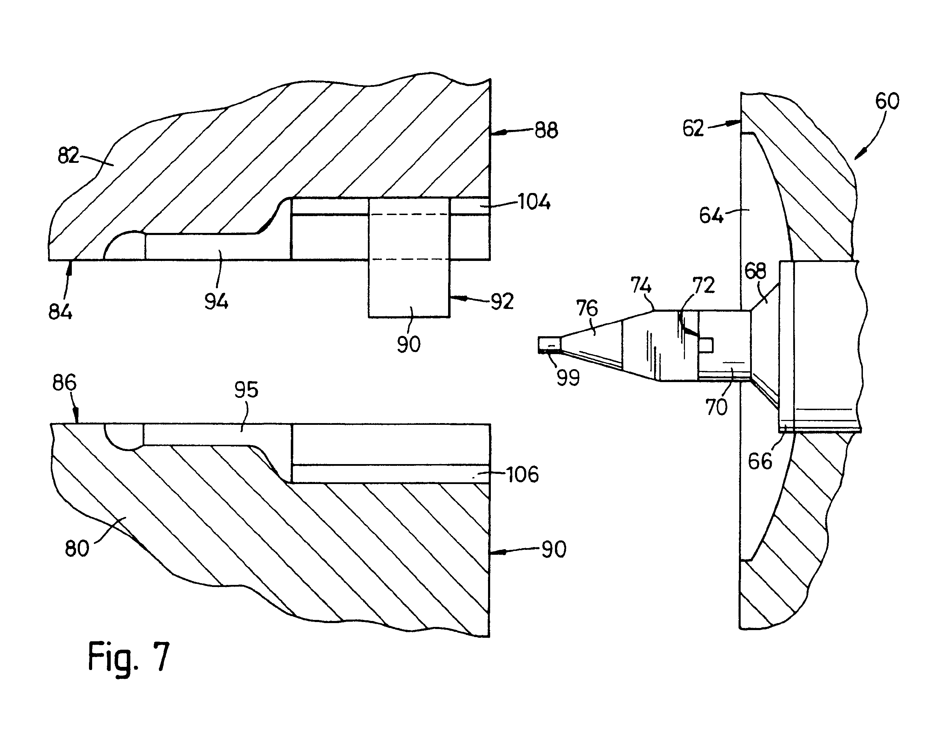

Figure 6 & 7 diagrammatically show manufacturing tools which are injection moulding dies, for forming the components shown in Figures 4 and 5. These tools comprised a first part 60 having a planar face 62 provided with a recess 64 for forming the head 10 and an associated mandrel or core plug with a cylindrical boss part 66 concentric about axis X-X and an adjacent frustoconical plug part 68 likewise symmetrical about said axis, these being to form the countersunk recess 18 in the head. Alternatively, the mandrel may comprise a generally cylindrical part 70 provided with a step, flat face and taping portion, and the countersunk part 68 and the cylindrical part 66 may be unitary with the part 60. Adjacent to them is a cylindrical plug part 70 also concentric about the said axis X-X to form the first part of the screw receiving bore and at one diametric position having the inclined step 72 to form a flank 44 of the tooth. The end of that step most closely adjacent the axis X-X meets a planar face 74 which towards the free end of the mandrel plug intersects frusto-conical part 76 which is to form the screw engaging ramp 42. The area 78 is part cylindrical, that is to say comprising a cylindrical form interrupted by the flat face 74 which extends secant-wise across the otherwise circular cross section joining the ends of the arc.

The forming dies comprise third and fourth parts 80 82 provided respectively with planar faces 84 88 and 86 90. The general arrangement of these three die components is such that when faces 84 and 86 meet these latter faces may meet the planar face 62 to leave a die cavity substantially the same as the fastener part shown in Figures 4 and 5. The cavity is provided with an appropriate passage(s) leading to plastics injection point(s).

The component 82 is provided with a generally semicylindrical cavity to cooperate with the mandrel plug in forming the leg 14 and having a core piece 90 projecting parallel to the planar face 88 and normal to the plane at which the components 80,82 meet (and part) and located so as to abut the face 74 when the die parts are closed together. The end surface 92 parallel to and adjacent to the planar face 88 is to form the face 46 of the tooth 24, Fig.5.

The part 82 is also provided with a plug or core piece 94 which forms approximately one half of the generally pear shaped space 96 seen in Figure 5. The other half of that space is formed by a like plug or core piece 95 on the other die component 80. The plug may also have web 98 Fig.6 to break through from the pear shaped space 96 to the frusto-conical aperture which forms the ramps 42, Fig.5.

The die part 80 is generally similar to the die part 82 except that it lacks the core piece 90.

Additionally, means are provided to form the slits between the legs 12,14. Each slit may be formed by a single web such as 104,106, provided one on each die part 82,80, or as a diametric extension from the mandrel on part 60.

The effect of the core piece 90 can be further seen in Figure 4. It extends generally tangentially of the cylindrical cavity so that when the plastics material is moulded around it and completely fills the cavities of the die parts, and then the die parts are separated and the so-formed fastener component can be removed, the space occupied by the core piece 90 forms the slot 100, Figures 1,4 and 5. This also has the affect of reducing the tickness of the leg 14 in the area 102 Fig.5 which enables that leg to be flexible in the required locality for the sliding ratcheting assembly action.

When the die parts are separated, to remove the moulded fastener component, the two core pieces 90 94 withdraw cleanly from the component, as does the mandrel, leaving the moulded tooth 44, without it being necessary for the tooth to snap over a tool part. This ensures a good shape and contour for the tooth which is important to the efficiency of the fastener in installation and use.

The screw is moulded separately.

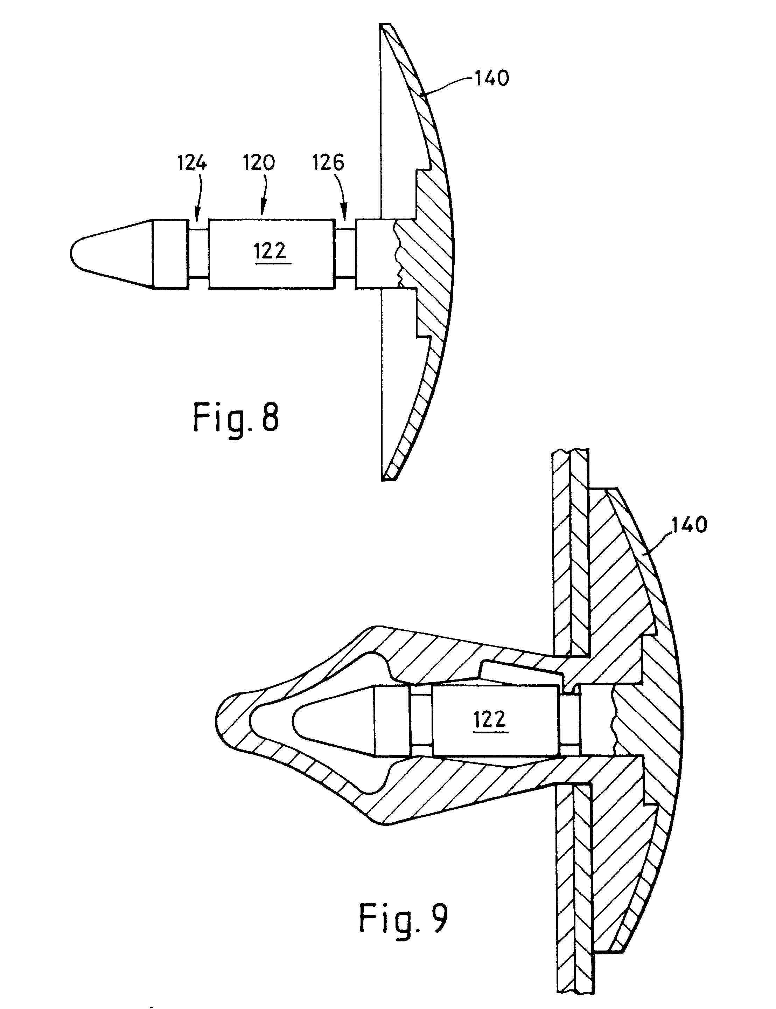

Figure 8 differs in having a pin 120 generally similar to the screw shown in Figure 3, but having a plain cylindrical portion 122 located between a pair of circumferential grooves 124, 126. The screw slot shown in Figure 3 is unnecessary, and is therefore omitted from the head 130 of the pin. Otherwise the pin 120 of Figure 8 is identical to that in Figure 3.

In the ready-for-use condition, groove 124 engages tooth 24. When the pin is pushed fully home to the position illustrated in Figure 9, groove 126 engages that tooth.

It will be appreciated that this second embodiment in Figure 9 is not readily disengaged, that this is considered to be in advantage in certain conditions.

The Figure 8 and 9 arragements differ also in the shape of the recessing head 10, and in the case of the pin in having a head 140, as seen in Figure 9, which extends over the whole of the head 10. However these particular differences are not significant, and the form employed may be varied to suit users wisches. For example the heads 10 and 140 together may make up a mushroom shape, with the head 140 completely covering the head 10 or with the head 140 being disposed in a recess in the head 10 as is the case in the screw version of Figure 1 - 7. Alternatively the head could be cheese-shaped. Moreover, the recess in the head 10 may be cylindrical as shown in Figure 9, frusto-conical as in Figure 5, part-spherical or otherwise shaped.

## Claims

1. A fastener comprising a first part having a head and a tubular shank projecting from the head which is axially slit into legs, internal ramps on the legs, and a second part comprising a circumferentially grooved pin for insertion into the shank for expanding the shank by contact with the ramps, and means in the first part for co-operating with the pin to control the axial position of the same, characterised in that said means cooperating with the pin comprise a tooth provided directly on one of the legs and projecting into the pin receiving bore between the legs.

2. A fastener as claimed in Claim 1 wherein said tooth has one flank facing the pin entry into the shank, said flank being inclined to facilitate deflection of the tooth accompanied by flexing of the leg as the pin slides with ratchet action on the tooth, and the other and operative face of the tooth lies in a plane normal to the shank axis.

3. Tools for moulding a fastener as claimed in Claim 1 or Claim 2 comprising a multi-component die set in which a first component has a recess to form the head of the fastener and also providing or associated with a mandrel to form a substantial portion of the pin receiving bore of the shank of the fastener, and said mandrel being profiled to form one flank of said tooth and second and third component each of which is recessed to produce a one of the legs of the shank and has web means to form slits to separate the legs, one of the second and third components including a core plug extending generally normally of a plane at which the second and third components meet when the die components are closed together, said core plug being located to extend through one leg and into said bore so as to form said other and opposite face of the tooth, the said slits between the legs being located in said plane, and the first component meeting the other two in a plane normal to the axis of the fastener.

4. A method of making the fastener as claimed in Claim 1 or Claim 2 comprising injection moulding material into the tools as claimed in Claim 3.

5. A two part fastener substantially as described with reference to Figures 1 to 5 or 8 and 9.

6. Tools for manufacturing a two part fastener substantially as described with reference to Figures 6 and 7 of the accompanying drawings.

Fig. 1

Fig. 2

Fig. 3

Fig. 4

Fig. 5

Fig. 6

EP 0 450 820 A1

Fig. 7

EP 0 450 820 A1

Fig. 8

Fig. 9

## EUROPEAN SEARCH REPORT

European Patent Office

Application Number

EP 91 30 2520

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 637 765 (NOBUAKI OMATA) * column 3, lines 10-25; figures 5,6 * | 1,5 | F 16 B 13/12 |
| A | | 2 | F 16 B 19/10 |
| | --- | | |
| D,A | US-A-4 610 587 (WOLLAR et al.) * column 4, line 59 - column 5, line 6; figure 13 * | 1,3,4,6 | |
| | ----- | | |

TECHNICAL FIELDS SEARCHED (Int. Cl.5)

F 16 B

The present search report has been drawn up for all claims

| Place of search | Date of completion of the search | Examiner |
|---|---|---|
| BERLIN | 04-07-1991 | WESTERMAYER W G |

EPO FORM 1503 03.82 (P0401)